Europäisches Patentamt

European Patent Office

Office européen des brevets

(11) Publication number: **0 282 780 B1**

# EUROPEAN PATENT SPECIFICATION

(45) Date of publication of patent specification: **22.04.92**  (51) Int. Cl.5: **G01N 25/18**

(21) Application number: **88102702.3**

(22) Date of filing: **24.02.88**

(54) **Method for measuring heat transfer coefficient and sensor including heat transfer element and thermal insulation element.**

(30) Priority: **03.03.87 JP 48566/87**
**04.03.87 JP 49372/87**

(43) Date of publication of application:
**21.09.88 Bulletin 88/38**

(45) Publication of the grant of the patent:
**22.04.92 Bulletin 92/17**

(84) Designated Contracting States:
**DE FR GB**

(56) References cited:
**EP-A- 0 150 111     DE-A- 2 515 281**
**DE-A- 2 724 846     DE-A- 3 444 383**
**FR-A- 2 279 095     US-A- 4 059 982**

**JOURNAL OF TESTING AND EVALUATION, vol. 2, no. 4, July 1974, pages 226-228; O.B. TSVETKOV "Experimental determinations of the thermal conductivity of fluids by coaxial-cylinder apparatus"**

(73) Proprietor: **SNOW BRAND MILK PRODUCTS & CO., LTD.**
**1-1, Naebo-cho 6-chome Higashi-ku Sapporo-shi Hokkaido 065(JP)**

(72) Inventor: **Hori, Tomoshige**
**No. 90-28 Azuma 8-chome**
**Kitamoto-shi Saitama-ken(JP)**
Inventor: **Itoh, Kensuke**
**No. 238-6, Megurida-cho**
**Kodaira-shi Tokyo(JP)**

(74) Representative: **Hoffmeister, Helmut, Dr. Dipl.-Phys.**
**Patentanwalt Goldstrasse 36**
**W-4400 Münster(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 282 780 B1

## Description

The present invention generally relates to a sensor for measuring the heat transfer coefficient between a heat transfer element being part of said sensor and a fluid surrounding said sensor, said heat transfer element having a cylindrical shape and being made of electrical conductive material to be connected to an electric power source and to a electric control circuit. The heat transfer coefficient is a parameter related to properties of fluids.

The term "fluid" in the present invention includes not only liquid substances and gaseous substances, but also semi-solid substances, namely flowing substances. Generally, it is very important for a process control of a fluid to measure properties of the fluid, for example the kinematic viscosity.

In EP-A2-150 111 a sensor for measuring properties of a fluid by using a thin metal wire as a heat transfer element is disclosed. The thin metal wire is immersed into a fluid as a measuring object, charging the thin metal wire with electricity so as to add heating to the heat transfer element and then calculating the heat transfer coefficient on the surface of the thin metal wire.

An electric current is sent through the thin metal wire, and a voltage applied to the thin metal wire is measured by a volt meter. A heat transfer coefficient $\alpha$ on the boundary surface between the thin metal wire and the fluid is calculated according to the well-known relational expression which, for example, is disclosed in Japan Food Industry Academy Review, 1988, volume 1.

When a heat transfer element is made of a thin wire, i.e. the ratio of diameter to the length of the thin wire is less than 1 : 1000, the heat loss from the two ends of the wire is extremely lower than the loss from the circumferential surface of the metal wire. Disregarding the heat loss capacity from the two ends therefore creates only a very small error in measurement.

However, if a miniaturization of the heat transfer element is requested, an error will arise, which is to be recognized, because the loss at the ends of the element cannot be ignored. In a miniaturized cylindrical heat transfer element heat generated from said element escapes also from the two end surfaces of the element. When the heat capacity lost from the two end surfaces is $W_2$, the whole calorific capacity of the heat transfer element is the sum of the heat capacity $W_2$ and the heat capacity $W_1$ transferred to the fluid from the mantle of the cylinder, i.e.

$$W = W_1 + W_2.$$

In the miniaturized heat transfer element, $W_2$

cannot be neglected as done with a long thin metal wire. This error occurs similarly when using a heat absorption material as well as a heat transfer element.

An object of the present invention is to provide a sensor for measuring the heat transfer coefficient including a heat transfer element of the kind mentioned above, which can precisely and directly measure a true value of the heat transfer coefficient between a heat transfer element and a fluid as a measuring object.

According to the present invention, this aim is achieved by a sensor which has a heat transfer element, whose both end surfaces are covered by a thermal insulation element, which are heatable and temperature-controllable by a suitable electric circuitry and during measurement are kept at a temperature so that no heat is transferred from the heat transfer element to the thermal insulation elements.

It is well-known that heat transfer phenomena occur through the differences of temperatures. Since the particular surface of a heat transfer element put into a fluid as a measuring object contacts the fluid and the residual surface of the heat transfer element remaining thermally insulated, a heat transfer between the heat transfer element and the fluid as a measuring object occurs only on the particular surface (mantle) of the heat transfer element, where the heat transfer element is heat-transferably contacted with the fluid. Therefore, according to the present invention, if a miniaturization of a heat transfer element is requested, a true heat capacity transferred between the heat transfer element and the fluid as a measuring object can be exactly measured without essential errors and the properties of the fluid can be precisely derived.

It should be noted that in FR-A 2.279.095 several embodiments of sensors for measuring the heat transfer coefficient are disclosed. The sensors make use of an insulator which is heatable and may therefore be kept at the temperature of the surrounding fluid. However, the known sensors are of a different shape and do not use a cylindrical form of the heat transfer element. The known construction therefore cannot be applied to the elements of the present invention.

BRIEF DESCRIPTION OF THE DRAWINGS

Fig. 1     is a front view illustrating an embodiment in which a combination of a heat transfer element and a thermal insulation element is in the shape of a cylindrical body;

Fig. 2     is a block diagram illustrating the sensor of Fig. 1 connected with an electric power source, a voltage measuring apparatus and a control apparatus;

Fig. 3    is a front view illustrating an embodiment in which a combination of a heat transfer element and a thermal insulation element is in the shape of a disk.

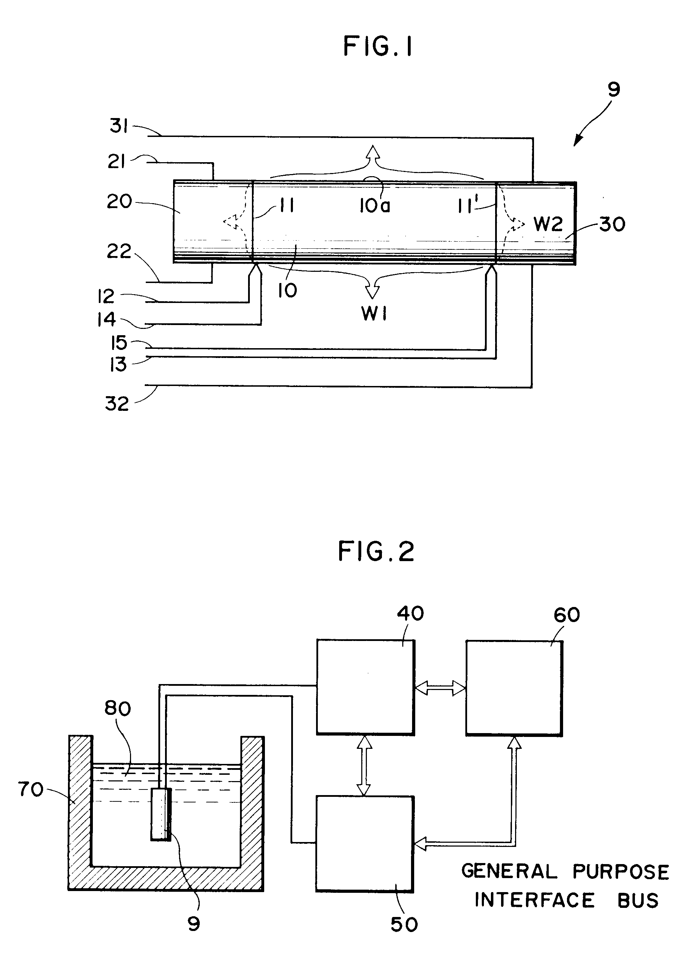

The invention will be described with reference to the accompanying Figures 1 to 3.

In the embodiment of Fig. 1, a heating material is used as a heat transfer element. However, also a heat absorbing material may be used as a heat transfer element with the same effect as that of the example wherein a heating material is used for the heat transfer element.

For the sensor a combination of a heat transfer element and a thermal insulation element, together in the shape of a cylindrical body is used and described with reference to Figures 1 and 2. A sensor 9 includes a heat transfer element 10 and thermal insulation elements 20, 30. The heat transfer element has the shape of a cylindrical body and is made of a metal having a conductivity and a exothermic ability. As the metal platinum has less secular change of electrical resistance, it is preferably used. The thermal insulation elements 20, 30 are united with two end sides of the heat transfer element 10. The thermal insulation element is also made of a metal having exothermic ability.

Interfaces 11, 11' between the heat transfer element 10 and the thermal insulation elements 20, 30 are electrically insulated by an insulating thin membrane (resin membrane, ceramic or the like). Conductive wires 12, 13 are connected with two ends of the heat transfer element 10 and with an electric power source 40 on the other hand. Voltage measuring wires 14, 15 are connected with the two ends of the heat transfer element 10 and with an voltage measuring apparatus on the other hand.

Conduction wires 21, 22 are connected with the thermal insulation element 20 and conduction wires 31, 32 are connected with the thermal insulation element 30. The conduction wires 21, 22 and 31, 32 are connected with the electric power source 40, respectively.

Numeral 60 designates a control apparatus for controlling the electric power source 40 and the voltage measuring apparatus 50. The electric power source 40, the voltage measuring apparatus 50 and the control apparatus 60 are connected by GP-TB (general purpose interface bus) control system, as recommended by IEEE, respectively.

As shown in Fig. 2, the sensor 9 is immersed in a fluid 80 as a measuring object in a tank 70. Separate currents are supplied to the heat transfer element 10 and the thermal insulation elements 20, 30, respectively and then the temperatures of the heat transfer element 10 and the thermal insulation elements 20, 30 on the interface 11, 11' are controlled to be equal by the control apparatus 60. A voltage applied to the metal transfer element 10 is measured by the voltage measuring apparatus 50 connected by the voltage measuring wire.

According to the measured value and a current value applied to the heat transfer element 10, a calorific value W of the heat transfer element 10 is calculated and a heat transfer coefficient $\alpha$ on the boundary surface between the heat transfer element 10 and the fluid body 80 is derived.

The characteristics of the present invention will be described according to Figures 1 and 2. In the sensor 9, the heat transfer element 10 is heat-transferably contacted with the fluid 80, and the two end surfaces which are not contacted with the fluid body 80 are united with thermal insulation elements 20, 30. Since the interfaces 11, 11' have no temperature difference between the heat transfer element 10 and the thermal insulation elements 20, 30, a heat transfer between the heat transfer element 10 and the thermal insulation elements 20, 30 do not occur through the interfaces 11, 11'.

In Fig. 1, the heat capacity $W_2$ transferred through the interfaces 11, 11' is zero. The heat transfer between the heat transfer element 10 and the fluid body 80 occurs on the circumferential surface 10a of the heat transfer element 10 which is heat-transferably contacted with the fluid body 80. Accordingly, the heat capacity transferred to the fluid body 80 through the contacting surface 10a corresponds to the whole calorific value of the heat transfer element 10. Thus, the heat capacity transferred from the heat transfer element 10 to the fluid body 80 as a measuring object can be exactly measured.

The size of each part of the sensor 9 of Figures 1 and 2 is optional in accordance with the usage hereof. For example, the heat transfer element 10 is 2 mm in diameter and about 6 mm in length and the thermal insulation elements 20, 30 are 2 mm in diameter and about 2 mm in length. In the drawings, arrows of continuous line designate the state of thermal radiation, and arrows of dotted line designate the state of thermal insulation in which a heat cannot be transferred.

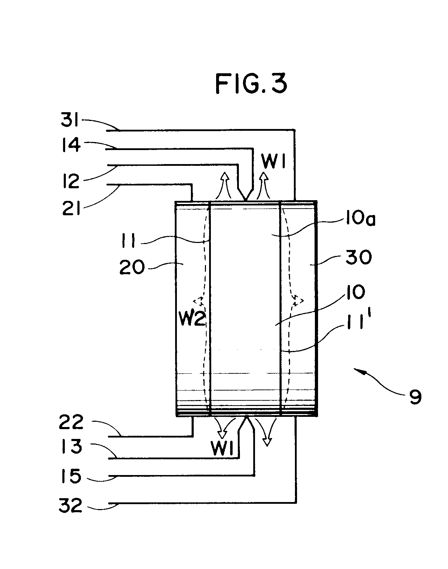

In Fig. 3, a different embodiment is described, in which a combination of a heat transfer element 10 and thermal insulation elements 20, 30 has the shape of a cylindrical body. In this embodiment, the thermal insulation elements 20, 30 are also united with both ends of the heat transfer element 10.

The difference in wiring between the embodiment of Fig. 3 and the embodiment of Fig. 1 consists of that conduction wires 12, 13 and voltage measuring wires 14, 15 are connected with the circumferential surface 10a of the heat transfer element 10. In Fig 1, both the wires are connected with both the end surfaces of the heat transfer element 10. Other points are equal to the embodiment of Fig. 1.

Im comparison with the embodiment of Fig. 1, the embodiment of Fig. 3 enables further miniaturization of the sensor 9. Namely, it is possible that the heat transfer element 10 is only 2 mm in diameter and 0,4 mm in thickness and the thermal insulation elements 20, 30 are 2 mm in diameter and 0,2 mm in thickness.

Furthermore, other kinds of different embodiments according to the present invention are considered as described in the following:
The sensor in the shape of a cylindrical body of Fig. 1 can be formed by winding a thin metal wire or a metallic paper ribbon around the sensor. All sensors can be coated with a thin, non-conductive guard membrane. A heat-transferably contacting surface can be optionally formed on any surface of the heat transfer element.

As a thermal insulation element, a heating material and a vacuum insulation are jointly used.

A heat-transferably contracting state between the heat transfer element and the thermal insulation element is not limited to be a physical contacting state.

## Claims

1. A sensor for measuring the heat transfer coefficient between a heat transfer element (10) being part of said sensor and a fluid surrounding said sensor, said heat transfer element (10) having a cylindrical shape and being made of electrical conductive material to be connected to an electric power source and to an electric control circuit,
characterized in that both end surfaces of the heat transfer element (10) are covered by thermal insulation elements (20, 30), which are heatable and temperature-controllable by a suitable electric circuitry and during measurement are kept at a temperature so that the heat is transferred from the heat transfer element to the thermal insulation elements (20, 30).

2. A sensor according to claim 1, characterized in that the boundary between each end surface and the adjacent thermal insulation element is occupied by a galvanically insulating membrane as interface (11, 11').

3. A sensor according to claims 1 or 2, characterized in that the heat transfer element (10) is made of metal, and/or that the material of the thermal insulation element is made of metal.

## Revendications

1. Capteur pour mesurer le coefficient de transfert de chaleur entre un élément de transfert thermique (10) faisant partie dudit capteur et un fluide entourant ledit capteur, ledit élément de transfert thermique (10) ayant une forme cylindrique et étant constitué d'un matériau électriquement conducteur à connecter à une source d'alimentation électrique et à un circuit de commande électrique,
caractérisé en ce que les deux extrémités de l'élément de transfert thermique (10) sont recouvertes d'éléments d'isolation thermique (20, 30) qui peuvent être chauffés et commandés en température par un circuit électrique approprié et qui, pendant la mesure, sont maintenus à une température telle qu'aucun transfert de chaleur ne s'effectue entre l'élément de transfert thermique et les éléments d'isolation thermique (20, 30).

2. Capteur selon la revendication 1, caractérisé en ce que la frontière entre chaque surface d'extrémité et l'élément d'isolation thermique adjacent est occupée par une membrane galvaniquement isolante servant d'interface (11, 11').

3. Capteur selon les revendications 1 ou 2, caractérisé en ce que l'élément de transfert thermique (10) est constitué d'un métal et/ou en ce que le matériau de l'élément d'isolation thermique est un métal.

## Patentansprüche

1. Sensor zum Messen des Wärmeübertragungskoeffizienten zwischen einem Wärmeübertragungselement (10), das einen Teil dieses Sensors bildet, und einer den Sensor umgebenden Flüssigkeit, wobei das Wärmeübertragungselement (10) eine zylindrische Form hat und aus elektrisch leitfähigem Material besteht und mit einer elektrischen Spannungsquelle und einem elektrischen Regelkreis verbindbar ist,
dadurch gekennzeichnet, daß beide Endflächen des Wärmeübertragungselements (10) mit wärmeisolierenden Elementen (20 30) bedeckt sind, die durch einen entsprechenden elektrischen Stromkreis aufheizbar und temperaturregelbar sind und während der Messung auf einer Temperatur gehalten werden, bei der keine Wärme von dem Wärmeübertragungselement auf die wärmeisolierenden Elemente (20, 30) übertragen wird.

2. Sensor nach Anspruch 1, dadurch gekennzeichnet, daß der Übergang zwischen jeder Endfläche und dem angrenzenden wärmeisolierenden Element von einer galvanisch isolierenden Membran als Zwischenglied (11, 11') ausgefüllt ist.

3. Sensor nach den Ansprüchen 1 oder 2, dadurch gekennzeichnet, daß das Wärmeübertragungselement (10) und/oder das wärmeisolierende Element aus Metall besteht (bestehen).

## FIG.1

## FIG.2

GENERAL PURPOSE
INTERFACE BUS

# FIG.3